# EUROPÄISCHE PATENTANMELDUNG

(11) **EP 0 524 909 A1**
(43) Veröffentlichungstag der Anmeldung: **27.01.1993**
(21) Anmeldenummer: 92810562.6
(22) Anmeldetag: 22.07.1992
(51) Int. Cl.: H04L 12/56, H04B 3/54

(54) **Verfahren zum Austauschen von Daten**

(30) Priorität: 22.07.1991 DE 4124227
(71) Anmelder: Datawatt BV, NL-8470 AC Wolvega (NL)
(72) Erfinder: Benninger, Hans, CH-5300 Turgi (CH); Hagmann, Walter, CH-5034 Suhr (CH)
(74) Vertreter: Ottow, Jens M., Dr.

(57) **Zusammenfassung**

Bei einem Verfahren zum Austauschen von Daten zwischen einer Masterstation (M) und wenigstens einer Aussenstation (A1,..,A4) über einen gemeinsamen Datenkanal (1) und eine Mehrzahl von zwischengeschalteten Relaisstationen (R1,..,R3), bei welchem Verfahren die Masterstation (M) an die Aussenstation eine Anfrage richtet und von der Aussenstation eine Antwort erhält und die Daten bei der Uebertragung in den zwischengeschalteten Relaisstationen (R1,..,R3) durch Empfangen und Wiederaussenden repetiert werden, werden die Daten in Form von Datentelegrammen zwischen der Masterstation (M) und der Aussenstation übertragen.

Mit jedem Datentelegramm ist dabei eine positive, ganze Zahl als Repetitionszahl verknüpft ist, die mit dem Datentelegramm übertragen wird, und bestimmt, wie oft das Datentelegramm nacheinander durch Relaisstationen (R1,..,R3) noch repetiert werden soll. Jede Relaisstation (R1,..,R3), welche ein Datentelegramm mit einer Repetitionszahl grösser Null empfängt, repetiert dieses Datentelegramm, sofern die Empfangsqualität über einer minimalen Grenzqualität liegt. Jede Relaisstation (R1,..,R3), welche ein Datentelegramm repetiert, leitet aus der mit dem empfangenen Datentelegramm verknüpften alten Repetitionszahl durch Reduktion um Eins eine neue Repetitionszahl ab und sendet die so abgeleitete neue Repetitionszahl anstelle der alten Repetitionszahl mit dem Datentelegramm zusammen wieder aus.

## Beschreibung

### TECHNISCHES GEBIET

Die vorliegende Erfindung bezieht sich auf das Gebiet der Datenübertragung. Sie betrifft ein Verfahren zum Austauschen von Daten zwischen einer Masterstation und wenigstens einer Aussenstation über einen gemeinsamen Datenkanal und eine Mehrzahl von zwischengeschalteten Relaisstationen, wobei
(a) die Masterstation an die wenigstens eine Aussenstation eine Anfrage richtet und von der wenigstens einen Aussenstation eine Antwort erhält; und
(b) die Daten bei der Uebertragung in den zwischengeschalteten Relaisstationen durch Empfangen und Wie deraussenden repetiert werden.

Ein solches Verfahren ist z.B. aus der EP-A1-0 395 495 bekannt.

### STAND DER TECHNIK

Bei der Datenübertragung z.B. in Radiosystemen oder speziell in Kommunikationssystemen, die das elektrische Mittelspannungs- und Niederspannungs-Verteilnetz als Datenkanal benutzen (DLC = Distribution Line Carriers oder Power Line Carriers genannt), sind die Uebertragungsverhältnisse in manchen Fällen so schlecht, dass zwischen entfernten Stationen keine direkte Verbindung aufgebaut werden kann. Es ist deshalb notwendig, eine entsprechende Verbindung via Relaisstationen herzustellen.

Erfahrungen haben nun gezeigt, dass in den zwei Uebertragungsrichtungen (von der sendenden zur empfangenden Station und zurück) grosse Unterschiede in der Uebertragungsqualität und damit auch in der Anzahl der benötigten Relaisstationen bestehen können. Es kommen daher für eine optimale Uebertragung in den beiden Richtungen mit grosser Wahrscheinlichkeit unterschiedliche Stationen als Relaisstationen zum Einsatz.

Die derzeit kommerziell erhältlichen DLC-Systeme kennen das Konzept der Relaisstationen meistens nicht. Sie arbeiten mit hohen Sendeleistungen, um die Distanzen zwischen entfernten Stationen zu überbrücken. Andere existierende Systeme benutzen ganz spezielle Relaisstationen, die nach Bedarf nur für diesen Zweck eingesetzt werden. Dies bedingt einen hohen Engineering-Aufwand mit entsprechend hohen Kosten, da die Standorte für diese Relaisstationen im Voraus für alle möglichen Netztopologien bestimmt werden müssen. Darüberhinaus ist ein solches System unflexibel.

In der eingangs genannten Druckschrift wird nun ein Algorithmus für die Bestimmung von Relaisstationen in einem solchen DLC-Netz vorgeschlagen. Der Vorschlag basiert auf einem speziellen Abfragezyklus, mit dem die Masterstation zuerst den besten Weg zu allen ihren Slavestationen bestimmt. Diese Lösung ist ebenfalls viel zu aufwendig und unflexibel. Der Abfragezyklus benötigt kostbare Uebertragungszeit und wird - besonders bei grossen Netzen - entsprechend lange dauern. Bei Aenderungen in den Uebertragungsverhältnissen müssen immer zuerst durch einen solchen Abfragezyklus die besten Uebertragungswege bestimmt werden, was einer grossen Verzögerung der eigentlichen Datenübertragung gleichkommt. Es können zwar im Laufe der Zeit für jede Station eine Datenbank von alternativen Uebertragungswegen erstellt werden. Solch eine Datenbank ist jedoch sehr komplex in der Implementierung.

Im übrigen sei zum Stand der Technik noch auf die Druckschriften EP-A1-0 388 672 und EP-A1-0 388 687 verwiesen.

### DARSTELLUNG DER ERFINDUNG

Es ist nun Aufgabe der Erfindung, ein Verfahren der eingangs genannten Art dahingehend zu verbessern, dass eine Anpassung an veränderte Netzverhältnisse schnell und flexibel erfolgen kann, und die Implementierung eines solchen Systems nur vergleichsweise geringe Engineering-Aufwendungen erfordert.

Die Aufgabe wird bei einem Verfahren der eingangs genannten Art dadurch erreicht, dass
(c) die Daten in Form von Datentelegrammen zwischen der Masterstation und der wenigstens einen Aussenstation übertragen werden;
(d) mit jedem Datentelegramm eine positive, ganze Zahl als Repetitionszahl verknüpft ist, die mit dem Datentelegramm übertragen wird, und bestimmt, wie oft das Datentelegramm nacheinander durch Relaisstationen noch repetiert werden soll;
(e) jede Relaisstation, welche ein Datentelegramm mit einer Repetitionszahl grösser Null empfängt, dieses Datentelegramm repetiert, sofern die Empfangsqualität über einer minimalen Grenzqualität liegt;
(f) jede Relaisstation, welche ein Datentelegramm repetiert, aus der mit dem empfangenen Datentelegramm verknüpften alten Repetitionszahl durch Reduktion um Eins eine neue Repetitionszahl ableitet, und die so abgeleitete neue Repetitionszahl anstelle der alten Repetitionszahl mit dem Datentelegramm zusammen wieder aussendet;
(g) zu Beginn einer Uebertragung die für die jeweilige Uebertragung maximale Anzahl der benötigten Repetitionen als anfängliche Repetitionszahl mit jedem Datentelegramm verknüpft wird; und
(h) ein Datentelegramm nicht mehr repetiert wird, wenn die mit ihm verknüpfte Repetitionszahl durch die vorangegangenen Repetitionen auf Null reduziert ist.

Dadurch, dass jede Relaisstation, die ein zu repetierendes Datentelegramm hört, dieses Telegramm auch automatisch repetiert, entfällt die aufwendige Bestimmung und Angabe von individuellen Relaisstationen für alle Aussenstationen im Netzwerk. Die Engineering-Aufwendungen vor der Installation eines solchen Kommunikationssystems können damit drastisch reduziert werden. Gegenüber Netzwerken, bei denen die Masterstation selbsttätig die besten Relaisstationen sucht, hat die erfindungsgemässe Lösung den Vorteil, dass sie praktische keinen Kommunikations-Overhead benötigt.

Eine erste bevorzugte Ausführungsform der Erfindung zeichnet sich dadurch aus, dass
(a) jedes Datentelegramm einen Kopf aufweist, in welchem die Repetitionszahl festgeschrieben ist;
(b) jede Aussenstation aus einem von ihr empfangenen Datentelegramm eine für eine optimale Uebertragung der Daten von der Masterstation zu ihr notwendige vorläufige erste anfängliche Repetitionszahl selber ableitet und diese vorläufige erste anfängliche Repetitionszahl bei einer Rückmeldung an die Masterstation weitergibt;
(c) die Masterstation anhand der von jeder Aussenstation empfangenen Datentelegramme eine für eine optimale Uebertragung der Daten von dieser Aussenstation zu der Masterstation notwendige vorläufige zweite anfängliche Repetitionszahl ableitet; und
(c) die Masterstation aus den vorläufigen ersten und zweiten anfänglichen Repetitionszahlen die endgültigen ersten und zweiten anfänglichen Repetitionszahlen bestimmt und für die jeweiligen Uebertragungsrichtungen im Kopf jeden Datentelegramms festschreibt.

Bei dieser Ausführungsform ist die Mitteilung einer Aussenstation an die Masterstation über die benötigte Anzahl Repetitionen in Auswärtsrichtung ("out-bound") durch wenige Bits im Kopf des normalen Antworttelegramms gegeben. Diese Bits werden jedesmal gesendet, wenn die Aussenstation ein Informationspaket an die Masterstation sendet. Dies hat gleichzeitig zur Folge, dass eine raschestmögliche Aufdatierung der entsprechenden anfänglichen Repetitionszahlen in der Masterstation erfolgen kann. Somit kann sich ein Netzwerk gemäss dieser Lösung innerhalb der kürzestmöglichen Zeit an veränderte Topologien oder Uebertragungsverhältnisse anpassen. Die unabhängige Behandlung der zwei Uebertragungsrichtungen bringt dabei den Vorteil einer minimalen Uebertragungszeit bei gleichzeitig hoher Uebertragungssicherheit.

Weitere Ausführungsformen der Erfindung ergeben sich aus den Unteransprüchen.

### KURZE BESCHREIBUNG DER ZEICHNUNG

Die Erfindung soll nachfolgend anhand von Ausführungsbeispielen im Zusammenhang mit der Zeichnung erläutert werden. Es zeigen
Fig. 1 im Ausschnitt ein Beispiel für die Topologie eines Kommunikationssystems auf der Basis eines elektrischen Verteilnetzes; und
Fig. 2 verschiedene mögliche Uebertragungswege in einem System gemäss Fig. 1.

### WEGE ZUR AUSFÜHRUNG DER ERFINDUNG

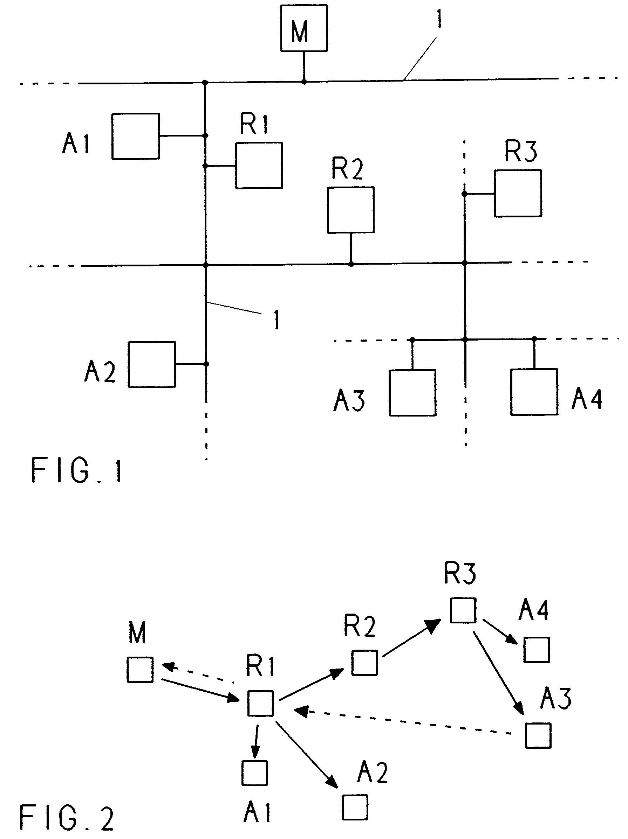

In Fig. 1 ist die grundlegende Topologie für eine Kommunikationssystem auf der Basis eines elektrischen Verteilnetzes wiedergegeben. Die einzelnen Leitungswege des Netzwerkes bilden Datenkanäle 1, über die eine Masterstation M mit einer Mehrzahl von im Netz verteilten Aussenstationen A1,..,A4 leitungsgebunden Daten austauschen kann.

Der Datenaustausch erfolgt wegen der auf dem Netz vorhandenen Störungen und der möglichen grossen Entfernungen zwischen Masterstation M und Aussenstationen A1,..,A4 über dazwischenliegende Relaisstationen R1,..,R3, welche die von der Masterstation M ausgesendeten Daten oder die von einer abgefragten Aussenstation abgegebene Antwort empfangen und wieder aussenden, d.h. repetieren (Pfeile in Fig. 2). In beiden Uebertragungsrichtungen Masterstation --> Aussenstation (durchgezogene Pfeile in Fig. 2) und Aussenstation --> Masterstation (strichlierte Pfeile in Fig. 2) sind aufgrund der Vielzahl von dazwischenliegenden Relaisstationen R1,..,R3 verschiedene Uebertragungswege möglich, die unterschiedliche Relaisstationen einschliessen und in der Uebertragungsqualität in der Regel voneinander abweichen.

Derartige Uebertragungswege werden im eingangs erwähnten Stand der Technik ausgewählt und festgelegt, sodass Uebertragungen zwischen der Masterstation M und einer bestimmten Aussenstation immer über dieselben ausgewählten Relaisstationen vorgenommen werden.

Die vorliegende Erfindung geht hier nun einen anderen Weg: Zunächst einmal werden die Daten zwischen den Stationen in Form von Datentelegrammen ausgetauscht. Jedes Datentelegramm enthält dabei eine Information, die angibt, ob es beim Empfang durch eine Relaisstation repetiert werden muss oder nicht. Jede Relaisstation, die ein Datentelegramm empfängt, welches repetiert werden muss, repetiert dieses Datentelegramm, falls die Empfangsqualität über einer minimalen Grenzqualität liegt. Auf diese Weise sind nicht nur die Relaisstationen eines bestimmten Uebertragungsweges, sondern auch viele andere Relaisstationen an der Weiterleitung der Daten beteiligt.

Die auf die Repetition bezogene Information im Datentelegramm ist eine positive, ganze Zahl, die Repetitionszahl. Diese Repetitionszahl gibt an, wie oft das Datentelegramm nacheinander durch Relaisstationen noch repetiert werden soll. Bei jeder Repetition durch eine Relaistation wird die alte Repetitionszahl des empfangenen Datentelegramms um eine Eins vermindert. Die so erhaltene neue Repetitionszahl wird anstelle der alten Repetitionszahl mit dem Datentelegramm wieder ausgesendet, sodass mit fortschreitender Uebertragung die Repetitionszahl eines Datentelegramms immer kleiner wird. Ein Datentelegramm wird dann nicht mehr repetiert, wenn die mit ihm verknüpfte Repetitionszahl durch die vorangegangenen Repetitionen auf Null reduziert worden ist.

Wichtig ist nun die Art und Weise, in der für eine bestimmte Uebertragung die notwendigen Ausgangswerte für die Repetitionszahl, die anfänglichen Repetitionszahlen, bestimmt werden, die beim Absenden eines Datentelegramms diesem Datentelegramm zugeordnet werden. Da die Uebertragung von der Masterstation M hin zu einer Aussenstation A1,..,A4 und die Antwort von der Aussenstation zurück an die Masterstation M auf unterschiedlichen Wegen erfolgen kann, gibt es dabei für beide Uebertragungsrichtungen unterschiedliche anfängliche Repetitionszahlen, die erste und die zweite anfängliche Repetitionszahl.

Gemäss einer bevorzugten Ausführungsform der Erfindung bestimmt jede Aussenstation zunächst anhand der empfangenen Datentelegramme (z.B. durch eine Schätzung ) eine für eine optimale Datenübertragung notwendige vorläufige erste anfängliche Repetitionszahl selbst und übermittelt diese Zahl bei einer Rückmeldung an die Masterstation M.

In gleicher Weise bestimmt die Masterstation anhand der empfangenen Datentelegramme von jeder Aussenstation eine für eine optimale Datenübertragung zwischen Aussenstation und Masterstation M erforderliche vorläufige zweite anfängliche Repetitionszahl. Aus den so erhaltenen vorläufigen Werten für die erste und zweite anfängliche Repetitionszahl leitet die Masterstation M nun die endgültigen ersten und zweiten anfänglichen Repetitionszahlen ab, die dann in den beiden Uebertragungsrichtungen von der Masterstation M in einem Kopf des Datentelegramms festgeschrieben werden. Damit ist unter stationären Bedingungen des Netzes eine sichere Uebertragung der Daten gewährleistet.

Falls nun die Antwort einer angesprochenen Aussenstation ausbleibt (weil sich z.B. in der Zwischenzeit die Uebertragungsverhältnisse im Netz geändert haben), erhöht die Masterstation M zumindest die zugehörige erste, eventuell aber auch die zugehörige zweite anfängliche Repetitionszahl jeweils um Eins und richtet dann erneut eine Anfrage an dieselbe Aussenstation, bis entweder die angefragte Aussenstation antwortet oder ein vorbestimmter Maximalwert der Zahlen erreicht ist. Bei Erhalt einer Antwort wird die bisherige erste (eventuell auch die bisherige zweite) anfängliche Repetitionszahl durch die neu gebildete, erhöhte Repetitionszahl ersetzt. Die anfänglichen Repetitionszahlen werden dabei in der Masterstation vorzugsweise in einer Datenbank abgelegt.

Wie bereits erwähnt, entfällt durch die automatische Repetition der Datentelegramme in allen empfangenden Relaisstationen die aufwendige Bestimmung und Angabe von individuellen Relaisstationen für alle Aussenstationen im Netzwerk. Die automatischen Mitteilungen der Repetitionszahlen umfassen nur wenige Bits im Kaopf eines Datentelegramms, sodass der zusätzliche Kommunikationsaufwand gering ist. Die fortlaufende Uebertragung der Repetitionszahlen hat zur Folge, dass die Datenbank für diese Zahlen stets in minimaler Zeit auf den aktuellen Stand gebracht wird, sodass Anpassungen an Aenderungen im Netz schnell erfolgen.

Dadurch, dass jede Station, die ein zu repetierendes Datentelegramm hört, dieses Datentelegramm auch automatisch repetiert, wird garantiert, dass die Zielstation immer die bestmögliche Signalqualität bekommt. Dies ist dadurch gegeben, dass mit grosser Wahrscheinlichkeit die für die Zielstation am besten gelegene Nachbarstation auch automatisch als Relaisstation eingesetzt wird. Eine Signalauslöschung durch Ueberlagerung von zwei oder mehr Signalen von verschiedenen Relaisstationen ist statistisch gesehen praktisch ausgeschlossen, da die grosse Signaldämpfung auf dem elektrischen Verteilnetz eine entsprechende Ueberlagerung praktisch unmöglich macht. Es wird also bei allen Empfängern in einem realen Netz immer eines der vielen gesendeten Signale eine viel grössere Signalamplitude aufweisen als die anderen. Dieses Signal dominiert dann alle anderen und wird bei den meisten derzeit gebräuchlichen Modulationsarten im Demodulator stark bevorzugt (sog. "Capture-Effekt").

Obgleich in Fig. 1 und Fig. 2 und in der bisherigen Beschreibung zwischen den Aussenstationen A1,..,A4 und den Relaisstationen R1,..,R3 unterschieden worden ist, werden gemäss einer bevorzugten Ausführungsform der Erfindung für beide Arten von Stationen die gleichen Netzstationen eingesetzt, d.h. die normalen Aussenstationen arbeiten im Bedarfsfall als Relaisstationen, und umgekehrt.
(Nur für den Prüfer bestimmt; nicht Teil der Anmeldung!)

### BEZEICHNUNGSLISTE

1 Datenkanal (Netzwerk)
M Masterstation
A1,..,A4 Aussenstation
R1,..,R3 Relaisstation

## Patentansprüche

1. Verfahren zum Austauschen von Daten zwischen einer Masterstation (M) und wenigstens einer Aussenstation (A1,..,A4) über einen gemeinsamen Datenkanal (1) und eine Mehrzahl von zwischengeschalteten Relaisstationen (R1,..,R3), wobei
(a) die Masterstation (M) an die wenigstens eine Aussenstation (A1,..,A4) eine Anfrage richtet und von der wenigstens einen Aussenstation (A1,..,A4) eine Antwort erhält; und
(b) die Daten bei der Uebertragung in den zwischengeschalteten Relaisstationen (R1,..,R3) durch Empfangen und Wiederaussenden repetiert werden;
dadurch gekennzeichnet, dass
(c) die Daten in Form von Datentelegrammen zwischen der Masterstation (M) und der wenigstens einen Aussenstation (A1,..,A4) übertragen werden;
(d) mit jedem Datentelegramm eine positive, ganze Zahl als Repetitionszahl verknüpft ist, die mit dem Datentelegramm übertragen wird, und bestimmt, wie oft das Datentelegramm nacheinander durch Relaisstationen (R1,..,R3) noch repetiert werden soll;
(e) jede Relaisstation (R1,..,R3), welche ein Datentelegramm mit einer Repetitionszahl grösser Null empfängt, dieses Datentelegramm repetiert, sofern die Empfangsqualität über einer minimalen Grenzqualität liegt;
(f) jede Relaisstation (R1,..,R3), welche ein Datentelegramm repetiert, aus der mit dem empfangenen Datentelegramm verknüpften alten Repetitionszahl durch Reduktion um Eins eine neue Repetitionszahl ableitet, und die so abgeleitete neue Repetitionszahl anstelle der alten Repetitionszahl mit dem Datentelegramm zusammen wieder aussendet;
(g) zu Beginn einer Uebertragung die für die jeweilige Uebertragung maximale Anzahl der benötigten Repetitionen als anfängliche Repetitionszahl mit jedem Datentelegramm verknüpft wird; und
(h) ein Datentelegramm nicht mehr repetiert wird, wenn die mit ihm verknüpfte Repetitionszahl durch die vorangegangenen Repetitionen auf Null reduziert ist.

2. Verfahren nach Anspruch 1, dadurch gekennzeichnet, dass jedes Datentelegramm einen Kopf aufweist, in welchem die Repetitionszahl festgeschrieben ist.

3. Verfahren nach Anspruch 2, dadurch gekennzeichnet, dass
(a) jede Aussenstation (A1,..,A4) aus einem von ihr empfangenen Datentelegramm eine für eine optimale Uebertragung der Daten von der Masterstation (M) zu ihr notwendige vorläufige erste anfängliche Repetitionszahl selber ableitet und diese vorläufige erste anfängliche Repetitionszahl bei einer Rückmeldung an die Masterstation (M) weitergibt;
(b) die Masterstation (M) anhand der von jeder Aussenstation (A1,..,A4) empfangenen Datentelegramme eine für eine optimale Uebertragung der Daten von dieser Aussenstation zu der Masterstation (M) notwendige vorläufige zweite anfängliche Repetitionszahl ableitet; und
(c) die Masterstation (M) aus den vorläufigen ersten und zweiten anfänglichen Repetitionszahlen die endgültigen ersten und zweiten anfänglichen Repetitionszahlen bestimmt und für die jeweiligen Uebertragungsrichtungen im Kopf jeden Datentelegramms festschreibt.

4. Verfahren nach Anspruch 3, dadurch gekennzeichnet, dass beim Ausbleiben einer Antwort von einer angesprochenen Aussenstation (A1,..,A4)
(a) die Masterstation (M) zumindest die zugehörige erste anfängliche Repetitionszahl jeweils um Eins erhöht und dann erneut eine Anfrage an die Aussenstation richtet, bis entweder die angefragte Aussenstation antwortet oder ein vorbestimmter Maximalwert erreicht ist; und
(b) bei Erhalt einer Antwort zumindest die bisherige erste anfängliche Repetitionszahl durch die neu erhaltene, erhöhte erste anfängliche Repetitionszahle ersetzt.

5. Verfahren nach Anspruch 4, dadurch gekennzeichnet, dass die jeweils gültigen ersten und zweiten anfänglichen Repetitionszahlen in der Masterstation (M) in einer Datenbank abgelegt werden.

6. Verfahren nach einem der Ansprüche 1-5, dadurch gekennzeichnet, dass die Aussenstationen selbst als Relaisstationen (R1,..,R3) verwendet werden.
